(19) Europäisches Patentamt
European Patent Office
Office européen des brevets

(11) EP 3 407 273 A1

(12) **EUROPÄISCHE PATENTANMELDUNG**

(43) Veröffentlichungstag:
28.11.2018 Patentblatt 2018/48

(51) Int Cl.:
*G06Q 10/06* (2012.01)  *G05B 23/02* (2006.01)

(21) Anmeldenummer: 17172168.1

(22) Anmeldetag: 22.05.2017

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft
80333 München (DE)**

(72) Erfinder:
• **Li, Rui
JiNan, 250000 (CN)**
• **Ochsenfeld, Henning
26123 Oldenburg (DE)**

(54) **VERFAHREN UND ANORDNUNG ZUR ERMITTLUNG EINES ANOMALEN ZUSTANDS EINES SYSTEMS**

(57) Die Erfindung betrifft ein Verfahren und eine Anordnung zur Ermittlung eines anomalen Zustands eines Systems, dessen Systemzustände unter Verwendung von Systemzustandsbeschreibungen beschrieben werden.

Dabei ist vorgesehen, dass eine Ähnlichkeit zwischen einer Musterverteilung von ausgewählten Zustandsmustern (2) von den Systemzustandsbeschreibungen (1) in einer ersten Menge (3) von Systemzustandsbeschreibungen (1) und einer durchschnittlichen Musterverteilung von den ausgewählten Zustandsmustern (2) von den Systemzustandsbeschreibungen (1) in einer zweiten Menge (4) von Systemzustandsbeschreibungen (1) ermittelt wird (100), diese Ähnlichkeit verglichen wird mit einer Mehrzahl von solchen Ähnlichkeiten zwischen den Musterverteilungen innerhalb der zweiten Menge (4) von Systemzustandsbeschreibungen (1) und der durchschnittlichen Musterverteilung in der zweiten Menge (4) von Systemzustandsbeschreibungen (1) (200) und unter Verwendung dieses Vergleichs ein anomaler Zustand (9) des Systems ermittelt wird (300).

FIG 6

EP 3 407 273 A1

**Beschreibung**

Die Erfindung betrifft ein Verfahren und eine Anordnung zur Ermittlung eines anomalen Zustands eines Systems.

Geräte, Maschinen oder Anlagen, kurz auch nur allgemein als "Systeme" bezeichnet, sowie in solchen Geräten, Maschinen oder Anlagen ablaufende Prozesse können durch bestimmte, dort auftretende Fehler ausfallen bzw. abbrechen, insbesondere ohne, dass eine entsprechende Fehlerwarnung bzw. Vorwarnung für solche Fehler bei Betreibern dieser Geräte, Maschinen, Anlagen oder Prozessen - mit ausreichend langer Vorlauf-/- warnzeit (, um entsprechend auf solche Fehler reagieren zu können,) - eingeht.

Dieses kann - unter Umständen - zu ungeplanten Stillständen und Produktionsausfällen bei diesen Geräten, Maschinen, Anlagen oder Prozessen - und somit zu unerwünschten Kosten, wie Ausfallkosten, Reparaturkosten u.ä., führen.

Deswegen besteht allgemein ein Bedarf, für - insbesondere zentrale und/oder kostspielige - Geräte, Maschinen oder Anlagen sowie in solchen Geräten, Maschinen oder Anlagen ablaufende Prozesse Verfahren zu etablieren, die den Betreibern frühzeitig bzw. überhaupt über etwaige Fehlbetriebe und aufkommende Fehler in Kenntnis setzen.

Solche Verfahren zur frühzeitigen Fehlererkennung bei Geräten, Maschinen, Anlagen und Prozessen werden oftmals als Anomalie-Detektionsverfahren, d.h., Verfahren zur Erkennung eines anomalen Zustands eines Systems, bezeichnet - und basieren in der Regel auf einer Auswertung von Systemzuständen.

Eine solche Anomalie-Detektion ist, aufgrund von einer Vielzahl von Systemparametern, welche in die auszuwertenden Systemzustände einfließen können, eine äußerst komplexe Aufgabe, die - wird sie (falls überhaupt möglich) "manuell" durch einen Beobachter, welcher das System, dessen Zustände bzw. die Systemparameter beobachtet, durchgeführt - eine spezielle Erfahrung und/oder ein spezielles Wissen eines solchen Beobachters (über das Gerät, die Maschine, die Anlage oder den Prozess) erfordert oder auch an physische und psychische Grenzen des Beobachters stoßen kann oder die - wird sie (falls ebenfalls so überhaupt möglich) automatisiert durch ein Überwachungssystem, beispielsweise mittels eines Computers, durchgeführt, - dort an diesbezügliche Ressourcengrenzen solcher Überwachungsgrenzen stoßen kann.

Es ist eine Aufgabe der Erfindung, Nachteile aus dem Stand der Technik bei einer Zustandsüberwachung eines Systems zu beheben und ein vorteilhaftes Verfahren zu einer Zustandsüberwachung, insbesondere einer automatisierten, zustandsbasierten Überwachung mit der Möglichkeit einer Anomalie-Detektion, bei einem System anzugeben.

Diese Aufgabe wird gelöst mit einem Verfahren und einer Anordnung zur Ermittlung eines anomalen Zustands eines Systems, dessen Systemzustände unter Verwendung von Systemzustandsbeschreibungen beschrieben werden, mit den Merkmalen des jeweiligen unabhängigen Patentanspruchs.

Zweckmäßige Ausgestaltungen und Vorteile der Erfindung ergeben sich aus den weiteren Ansprüchen und der Beschreibung und beziehen sich auf das Verfahren und die Anordnung.

Das Verfahren und die Anordnung zur Ermittlung eines anomalen Zustands eines Systems sehen vor, dass Systemzustände unter Verwendung von Systemzustandsbeschreibungen beschrieben werden.

Eine solche Systemzustandsbeschreibung kann beispielsweise ein Event-Log-Datum sein. Zweckmäßigerweise weist eine solche Systemzustandsbeschreibung bzw. ein solches Event-Log-Datum eine Datums- und/oder Zeitangabe auf, welche angeben kann, wann diese Systemzustandsbeschreibung bzw. dieses Event-Log-Datum, insbesondere von dem System, generiert worden ist bzw. zu welchem Zeitpunkt die Systemzustandsbeschreibung bzw. das Event-Log-Datum das System beschreibt.

Weiter zweckmäßigerweise weist eine solche Systemzustandsbeschreibung bzw. ein solches Event-Log-Datum eine, beispielsweise semantische, Angabe auf, welche einen Zustand des Systems beschreibt und/oder repräsentiert und/oder charakterisiert.

Weiter kann es auch zweckmäßig sein, einer solchen Systemzustandsbeschreibung bzw. einem solchen Event-Log-Datum einen alphanumerischen Wert, gegebenenfalls unter Verwendung eines "Wörterbuchs", welches für eine Vielzahl von möglichen Systemzustandsbeschreibungen bzw. solchen Event-Log-Daten jeweils eine Zuweisung zu einem entsprechenden alphanumerischen Wert enthält, zuzuweisen.

Das System kann eine Mehr- oder Vielzahl von solchen Systemzustandsbeschreibungen bzw. Event-Log-Daten, insbesondere für eine Mehr- oder Vielzahl von Zeitpunkten, generieren, welche sich dann in einer (Zeit-)Reihe ("Sequenz") strukturieren lassen ("Strukturierung").

Diese strukturierte (Zeit-)Reihe ("Sequenz") aus Systemzustandsbeschreibungen bzw. Event-Log-Daten lässt sich dann auch - wird den Systemzustandsbeschreibungen bzw. den Event-Log-Daten jeweils der/ein entsprechender alphanumerischer Wert zugewiesen ("Transformation") - in eine strukturierte (Zeit-)Reihe ("Sequenz") aus den alphanumerischen Werten "transformieren".

Weiter ist bei dem Verfahren und der Anordnung dann vorgesehen, dass eine Ähnlichkeit zwischen einer Musterverteilung von ausgewählten Zustandsmustern von den Systemzustandsbeschreibungen in einer ersten Menge von Systemzustandsbeschreibungen und einer durchschnittlichen Musterverteilung von den ausgewählten Zustandsmustern von den Systemzustandsbeschreibungen in einer zweiten Menge von Systemzustandsbeschreibungen ermittelt wird.

"Muster" kann dabei allgemein eine statische Struktur bezeichnen, die durch ihr erneutes identisches Auftreten (in einem strukturierten Gesamtraum) erkannt wurde. Anders ausgedrückt, "Muster" ist eine zur gleichförmigen Wiederholung (Reproduktion) bestimmte Denk-, Gestaltungs- oder Verhaltensweise bzw. entsprechender Handlungsablauf.

Ein "Muster" kann auch ein Merkmal oder mehrere (zusammenhängende) Merkmale sein, das bzw. die bei Wiederholungen eines größeren Zusammenhangs erhalten bleibt bzw. reproduziert wird/bleiben bzw. reproduziert werden. Die Wiederholungen können räumlicher und/oder zeitlicher Art sein oder auch reproduktiver Art.

Bevorzugt kann vorgesehen sein, dass die erste Menge von Systemzustandsbeschreibungen (insbesondere auch ausgedrückt durch die Event-Log-Daten oder transformiert in die alphanummerischen Werte) (auf eine Anomalie) zu untersuchenden Systemzustandsbeschreibungen und/oder eine Systemzustandsbeschreibungszeitreihe ("Sequenz" (oder auch "Teilsequenz")) eines ersten Zeitabschnitts ist, beispielsweise eines Tages ist ("Tagessequenz").

Bevorzugt kann auch vorgesehen sein, dass die zweite Menge von Systemzustandsbeschreibungen (insbesondere auch ausgedrückt durch die Event-Log-Daten oder transformiert in die alphanummerischen Werte) (vorgebbare) Referenzsystemzustandsbeschreibungen bzw. ein Normalszenarium beschreibende Systemzustandsbeschreibungen und/oder eine Systemzustandsbeschreibungszeitreihe eines zweiten Zeitabschnitts ist, beispielsweise von mehreren Tagen, von einer oder mehreren Woche/n und/oder von einem oder mehreren Monat/en ist/sind ("Wochen-/Monatssequenz" bzw. "Gesamtsequenz").

Besonders zweckmäßig ist es, wenn der zweite Zeitabschnitt ein Mehr- oder Vielfaches des ersten Zeitabschnitts, beispielsweise der erste Zeitabschnitt ein Tag bzw. der zweite Zeitabschnitt mehrere Wochen oder Monate, ist/sind.

Anschaulich und vereinfacht ausgedrückt, eine Gesamtsequenz (von Systemzustandsbeschreibungen bzw. Event-Log-Daten bzw. alphanummerischen Werten) lässt sich dann in N (N = Anzahl) Teilsequenzen (von Systemzustandsbeschreibungen bzw. Event-Log-Daten bzw. alphanummerischen Werten) unterteilen bzw. "zerschneiden".

Weiter ist es besonders zweckmäßig, wenn die Ähnlichkeit ein statischer Abstand, insbesondere eine Mahalanobis Distanz MD, ist.

Die Mahalanobis Distanz MD ist dabei ein (statistischer) Abstand bzw. (ein statistisches Abstandsmaß) zwischen einem Datenpunkt und einem Zentroiden eines multivariaten Raums (Gesamtmittelwert) - und wird meist, insbesondere in einer Hauptkomponentenanalyse, dazu verwendet, um "Ausreißer" zu identifizieren. Sie ist eine trennschärfere multivariate Methode zum Erkennen von "Ausreißern" als das Betrachten jeweils einer Variablen, da die unterschiedlichen Skalen der Variablen und die Korrelationen zwischen ihnen berücksichtigt werden.

Ferner ist besonders bevorzugt vorgesehen, dass das bzw. ein ausgewähltes Zustandsmuster unter Verwendung eines Verfahrens einer Sequenzmuster-Erkennung ("sequential pattern mining"), insbesondere eines "PreFix-Span"-Algorithmus, insbesondere aus den Systemzustandsbeschreibungen (insbesondere auch ausgedrückt durch die Event-Log-Daten oder transformiert in die alphanummerischen Werte) der zweiten Menge von den Systemzustandsbeschreibungen (insbesondere auch ausgedrückt durch die Event-Log-Daten oder transformiert in die alphanummerischen Werte), d.h. insbesondere aus/in der "Gesamtsequenz", ermittelt und ausgewählt wird.

Kurz vereinfacht und beispielhaft anschaulich, durch Anwendung des "PreFixSpan"-Algorithmus auf die - das Normalszenarium des Systems beschreibende - Gesamtsequenz kann das bzw. ein ausgewähltes Zustandsmuster ermittelt werden.

Dazu kann zweckmäßigerweise auch vorgesehen sein, dass die zweite Menge von den Systemzustandsbeschreibungen (insbesondere auch ausgedrückt durch die Event-Log-Daten oder transformiert in die alphanummerischen Werte) in N (N = Anzahl) von den ersten Mengen von den Systemzustandsbeschreibungen (insbesondere auch ausgedrückt durch die Event-Log-Daten oder transformiert in die alphanummerischen Werte) aufge-/zerteilt bzw. "zerschnitten" wird (anschaulich ausgedrückt, die "Gesamtsequenz wird in N "Teilsequenzen" "zerteilt") - und auf diese N ersten Mengen von den Systemzustandsbeschreibungen (insbesondere auch ausgedrückt durch die Event-Log-Daten oder transformiert in die alphanummerischen Werte) bzw. die N "Teilsequenzen" des Verfahrens einer Sequenzmuster-Erkennung ("sequential pattern mining"), insbesondere der "PreFixSpan"-Algorithmus, angewandt wird.

Ein solcher "PreFixSpan"-Algorithmus (vgl. "PrefixSpan: Mining Sequential Patterns Efficiently by Prefix-Projected Pattern Growth", Jian Pei, Jiawei Han, Behzad Mortazavi-Asl, Helen Pinto, Intelligent Database Systems Research Lab. School of Computing Science, Simon Fräser University, Burnaby, B.C., Canada V5A 1S6, Qiming Chen, Umeshwar Dayal, Mei-Chun Hsu, Hewlett-Packard Labs. Palo Alto, California 94303-0969 U.S.A.) ist eine "sequential pattern mining" Methode, die darauf abzielt Muster zu entdecken, die sich insbesondere in zeitlichen Abfolgen von alphanumerischen Werten (vgl. (Teil-)Sequenz, Gesamtsequenz, dann "Sequenzmuster") "verbergen".

Ein solcher "PreFixSpan"-Algorithmus kann zudem verschiedene Parametrierungsmöglichkeiten haben, um die Anzahl und eine Signifikanz gefundener (sich wiederholender (und so auffindbarer)) Strukturen von Systemzustandsbeschreibungen bzw. Event-Log-Daten bzw. alphanummerischen Werten bzw. "Sequenzmuster", d.h. Muster in einer Sequenz ("Sequenzmuster"), zu beeinflussen.

Solche Parametrierungsmöglichkeiten können sein:

- eine "Prozentuale Abdeckung". D.h., in wieviel Prozent der gesamten Observationen (Zeitreihen) sollte das gefundene Muster vertreten sein, um als signifikant vorliegend zu gelten.
- eine "Maximale Anzahl" an Sequenz-Items (d.h., Systemzustandsbeschreibungen bzw. Event-Log-Daten bzw. alphanummerischen Werte). Resultierende Sequenzmuster werden die maximal vorgegebene Anzahl an Items somit nicht übersteigen.
- eine "Maximale Anzahl" an Gap-Items. D.h., wie viele irrelevante Items (Systemzustandsbeschreibungen bzw. Event-Log-Daten bzw. alphanummerischen Werten) Werte dürfen zwischen zwei Items eines gefundenen Sequenzmusters existieren.

Ferner kann zweckmäßigerweise auch vorgesehen sein, dass eine Rangordnung ("Ranking") der, insbesondere unter Verwendung des "PreFixSpan"-Algorithmus gefundenen, ausgewählten Zustandsmuster, insbesondere mit einer Häufigkeit als Rangordnungskriterium, gebildet wird ("Sortierung").

Mit einer solchen Rangordnung von den ausgewählten Zustandsmustern kann dann eine Häufigkeitsverteilung (für diese ausgewählten Zustandsmuster), d.h. die Musterverteilung, für die Systemzustandsbeschreibungen der ersten Menge von Systemzustandsbeschreibungen, beispielsweise einer zu untersuchenden Teilsequenz, und/oder der zweiten Menge von Systemzustandsbeschreibungen, beispielsweise einer ein Normalszenarium des Systems beschreibende Gesamtsequenz, erstellt werden.

Vereinfacht und anschaulich ausgedrückt, es wird ermittelt, wie oft ein jeweiliges Zustandsmuster bzw. gefundenes Sequenzmuster von den ausgewählten Zustandsmustern bzw. gefundenen Sequenzmustern in der ersten Menge von Systemzustandsbeschreibungen bzw. Teilsequenz und/oder der zweiten Menge von Systemzustandsbeschreibungen bzw. Gesamtsequenz vorkommt.

Insbesondere kann es zweckmäßig sein, eine solche Häufigkeitsverteilung (von den ausgewählten Zustandsmustern bzw. gefundenen Sequenzmustern) für die N (N = Anzahl) in der zweiten Menge von Systemzustandsbeschreibungen enthaltenden ersten Mengen von Systemzustandsbeschreibungen zu ermitteln/- stellen.

Anders ausgedrückt, für jede (d.h., n = 1 bis N) in der Gesamtsequenz enthaltene Teilsequenz kann die Häufigkeitsverteilung (von den ausgewählten Zustandsmustern bzw. gefundenen Sequenzmustern) aufgestellt werden ("Sequenzmusterhäufigkeiten").

Mathematisch ausgeführt kann dies dadurch erfolgen, dass N Vektoren von Sequenzmusterhäufigkeiten, d.h. die Häufigkeitsverteilungen von den ausgewählten Zustandsmustern bzw. gefundenen Sequenzmustern in den N Teilsequenzen bzw. N ersten Mengen von Zustandssystembeschreibungen der Gesamtsequenz, extrahiert und ermittelt - und als Matrix arrangiert werden.

Weiterhin kann zweckmäßigerweise vorgesehen sein, dass unter Verwendung von zumindest einer Mehrzahl von Musterverteilungen von den ausgewählten Zustandsmustern von den Systemzustandsbeschreibungen in der ersten Menge von den Systemzustandsbeschreibungen die durchschnittliche Musterverteilung (von den ausgewählten Zustandsmustern von den Systemzustandsbeschreibungen in der zweiten Menge von Systemzustandsbeschreibungen bzw. Gesamtsequenz) ermittelt wird, insbesondere unter Verwendung einer Schätzung ermittelt wird (Anlernen von multivarianten Häufigkeitsmustern für ein Systemszenarium, insbesondere ein Systemnormalszenarium).

Das heißt vereinfacht ausgedrückt, unter Verwendung der N Häufigkeitsverteilungen der N Teilsequenzen bzw. einer solchen Matrix (aus den N Sequenzmusterhäufigkeitenvektoren) kann dann zweckmäßigerweise die durchschnittliche Musterverteilung von den ausgewählten Zustandsmustern von den Systemzustandsbeschreibungen in der zweiten Menge von Systemzustandsbeschreibungen bzw. Gesamtsequenz bestimmt werden ("Anlernen der Multivarianten Häufigkeitsmuster").

Dazu, d.h. zur Ermittlung der durchschnittlichen Musterverteilung und als (mathematische) Beschreibung derselben, kann insbesondere eine Kovarianz-Matrix S (von den zur Matrix arrangierten N Sequenzmusterhäufigkeitenvektoren) und ein arithmetisches Mittel $\mu$, insbesondere ein komponentenweises arithmetisches Mittel $\mu$, bestimmt werden.

Da die durchschnittliche Musterverteilung bzw. die Kovarianz-Matrix S (von den zur Matrix arrangierten N Sequenzmusterhäufigkeitenvektoren) und das arithmetische Mittel $\mu$ stark durch "Ausreißer" beeinflusst werden kann/können, kann es zweckmäßig sein, eine, insbesondere robuste, Schätzung der Lokation vom arithmetischen Mittel $\mu$ und der Streuung von der Kovarianz-Matrix S zu verwenden.

Die Kovarianz-Matrix S und das arithmetische Mittel $\mu$ können dann zweckmäßigerweise zur Bestimmung der Ähnlichkeit zwischen einer Musterverteilung von ausgewählten Zustandsmustern von den Systemzustandsbeschreibungen in einer ersten Menge von Systemzustandsbeschreibungen, d.h. einer Teilsequenz n (ausgedrückt durch einen Vektor $x_n$ (Sequenzmusterhäufigkeitenvektoren)), und der durchschnittlichen Musterverteilung (ausgedrückt durch die Kovarianz-Matrix S und das arithmetische Mittel $\mu$) von den ausgewählten Zustandsmustern von den Systemzustandsbeschreibungen in der zweiten Menge von Systemzustandsbeschreibungen (ausgedrückt durch die Matrix X aus den Sequenzmusterhäufigkeitenvektoren $x_n$), d.h. der Gesamtsequenz, auf Basis der Mahalanobis-Distanz MD verwendet werden.

$$\text{Beispielsweise durch } MD_n = \sqrt{(x_n - \mu)^T S^{-1} (x_n - \mu)}.$$

Die Matrix X (einer Gesamtsequenz) - aus den Sequenzmusterhäufigkeitenvektoren $x_n$ (der N Teilsequenzen der Gesamtsequenz) - kann so auch in eine eindimensionale (Zeit-)Reihe von den Distanzwerten $MD_n$ (für jeden der Sequenzmusterhäufigkeitenvektoren $x_n$) überführt werden.

Auf eine solche (Zeit-)Reihe kann zweckmäßigerweise eine Verteilungsstatistik angewandt werden. So können beispielsweise ein Mittelwert $\mu$ und/oder eine Varianz $\sigma$ für eine solche (Zeit-)Reihe ermittelt werden, Insbesondere kann dabei die (Zeit-)Reihe als Gauß verteilt angenommen werden.

Besonders zweckmäßig - um insbesondere einen anomalen Systemzustand bzw. Systemszenarium von einem normalen Systemzustand bzw. Systemnormalszenarium unterscheiden zu können - ist es, wenn die Systemzustandsbeschreibungen der zweiten Menge von den Systemzustandsbeschreibungen zumindest weitestgehend normale Systemzustände sind - und so die durchschnittliche Musterverteilung für ein Systemnormalszenarium ermittelt wird. Ferner können dann zweckmäßigerweise die Systemzustandsbeschreibungen der ersten Menge von den Systemzustandsbeschreibungen (auf eine Anomalie) zu untersuchende Systemzustände sein.

Ferner ist dann weiter bei dem Verfahren und der Anordnung vorgesehen, dass diese Ähnlichkeit verglichen wird mit einer Mehrzahl von - derartigen bzw. solchen - Ähnlichkeiten zwischen - derartigen bzw. solchen - Musterverteilungen innerhalb der zweiten Menge von Systemzustandsbeschreibungen und der durchschnittlichen Musterverteilung in der zweiten Menge von Systemzustandsbeschreibungen.

Schließlich ist dann bei dem Verfahren und der Anordnung auch vorgesehen, dass unter Verwendung dieses Vergleichs dann ein anomaler Zustand des Systems ermittelt wird.

Vereinfacht und beispielhaft anschaulich ausgedrückt, es wird die Ähnlichkeit der (insbesondere zu untersuchenden) Teilsequenz bzw. die Ähnlichkeit der Musterverteilung der (insbesondere zu untersuchenden) Teilsequenz (zu der (insbesondere System normalen) Gesamtsequenz bzw. zu der durchschnittlichen Musterverteilung der (insbesondere System normalen) Gesamtsequenz) verglichen mit den Ähnlichkeiten, welche die in der Gesamtsequenz enthaltenen (insbesondere System normalen) Teilsequenzen bzw. deren Musterverteilungen zu der (insbesondere System normalen) Gesamtsequenz bzw. zu der durchschnittlichen Musterverteilung der (insbesondere System normalen) Gesamtsequenz aufweisen.

Anders und beispielhaft ausgedrückt, es wird die Mahalanobis-Distanz MD einer zu untersuchenden Teilsequenz bzw. deren Sequenzmusterhäufigkeiten zu der aus den Teilsequenzen bzw. deren Sequenzmusterhäufigkeiten (vektoriell) arrangieren Matrix der Gesamtsequenz verglichen mit den in die eindimensionale (Zeit-)Reihe an Mahalanobis-Distanzen MD überführte Matrix der Gesamtsequenz.

Besonders zweckmäßig kann es sein, wenn der Ähnlichkeitsvergleich unter Verwendung von statistischen Verteilungsparametern, insbesondere eines Mittelwerts $\mu$ und/oder einer Varianz $\sigma$, welche für die Mehrzahl von den Ähnlichkeiten, insbesondere für die Mahalanobis-Distanzen MD (Zeit-)Reihe, ermittelt werden, durchgeführt wird.

Weiterhin kann bevorzugt vorgesehen sein, dass bei dem Ähnlichkeitsvergleich ein vorgebbarer Sensitivitätsparameter $\alpha$ verwendet wird.

Ferner kann es zweckmäßig sein, dass bei dem Ähnlichkeitsvergleich ein Vergleichswert $\delta$ für eine Mehrzahl von den Ähnlichkeiten ermittelt wird, insbesondere unter Verwendung des Mittelwerts $\mu$ und/oder der Varianz $\sigma$ und/oder des Sensitivitätsparameters.

Sind die Ähnlichkeiten die Mahalanobis-Distanzen MD, insbesondere der (Zeit-)Reihe, (mit den Verteilungsparametern Mittelwert $\mu_{MD}$ und Varianz $\sigma_{MD}$) so kann zweckmäßigerweise dieser Vergleichswert $\delta$ derart. ermittelt werden, dass

$$\delta = \mu_{MD} + \alpha\sigma_{MD}.$$

Ferner kann auch bevorzugt vorgesehen sein, dass das System ein Gerät, insbesondere ein Mittelspannungsumrichter, oder eine Maschine oder eine Anlage oder ein in einem Gerät oder in einer Anlage oder in einer Maschine ablaufender Prozess ist.

Das Verfahren und die Anordnung ermöglicht so eine automatisierte Anomalie-Detektion basierend auf bislang menschlich nicht auswertbare Systemzustandsbeschreibungen, beispielsweise Event-Log-Datenströme, bzw. generisch auf jede Art von alphanumerischen Datenströmen. D.h., Muster können hierin detektiert und überhaupt nutzbar gemacht werden.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Anordnung kombinierbar. So sind Verfahrensmerkmale, gegenständlich formuliert, auch als Eigenschaft der entsprechenden Anordnung zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explicit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Es zeigen:

FIG 1    eine schematische Darstellung von Event-Log-Daten eines technischen Geräts,

FIG 2    eine schematische Darstellung von einer Transformation der Event-Log-Daten eines technischen Geräts in eine aus alphanummerischen Werten bestehende Zeitreihe,

FIG 3    eine schematische Darstellung einer nach Musterhäufigkeiten sortierte Liste einer in einer Teilsequenz gefundenen Sequenzmuster,

FIG 4    eine schematische Darstellung einer Matrix einer multivarianten Häufigkeitsverteilung einer Gesamtsequenz bzw. von Häufigkeitsvektoren von in der Gesamtsequenz enthaltenen Teilsequenzen,

FIG 5    eine schematische Darstellung einer eindimensionalen Zeitreihe von Mahalanobis-Distanzen der Matrix der Häufigkeitsvektoren, und

FIG 6    eine schematische Darstellung eines Vorgehens zur Ermittlung eines anomalen Zustands eines Systems

Ermittlung eines anomalen Zustands eines Systems (FIGen 1 bis 6)

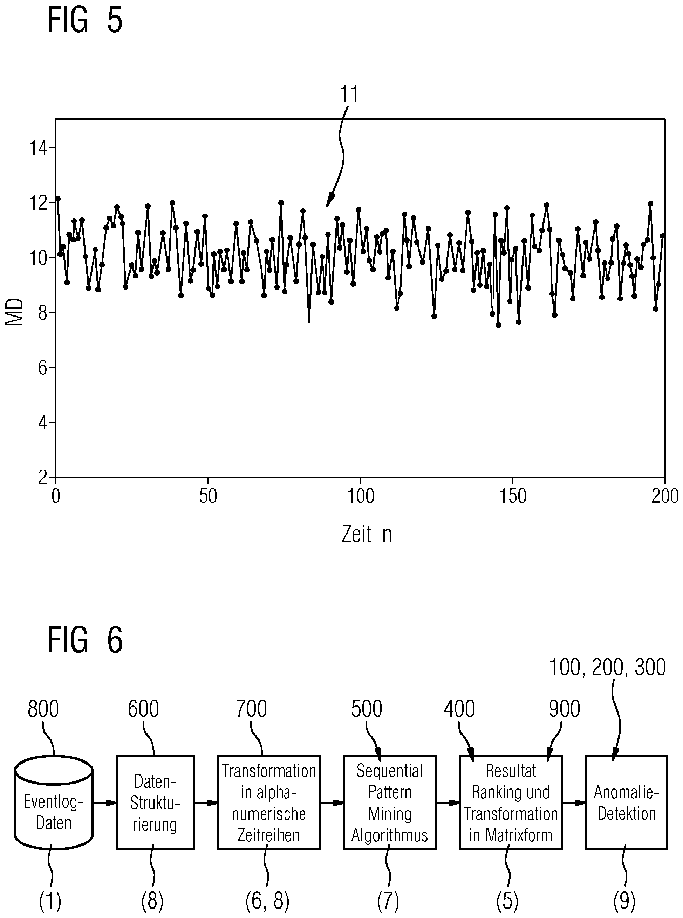

FIG 6 zeigt - im Überblick - eine schematische Darstellung eines Vorgehens zur Ermittlung eines anomalen Zustands eines Systems 300 (kurz auch nur "Anomalie-Detektion" 300), beispielsweise eines technischen Geräts, wie eines Mittelspannungsumrichters.

FIGen 1 bis 5 zeigen bzw. verdeutlichen diesbezügliche Teile des Vorgehens bzw. der Anomalie-Detektion 300 - in schematisch (vereinfachter) Darstellung.

Das technische Gerät, hier der Mittelspannungsumrichter, kurz im Folgenden nur "Gerät", generiert, wie FIG 6 verdeutlicht, sogenannte Event-Log-Daten 1 (vgl. FIG 6, "Eventlog-Daten" 800), welche Systemzustände des Geräts beschreiben. An einer Schnittstelle des Geräts fallen diese Event-Log-Daten 1 zur Extraktion an.

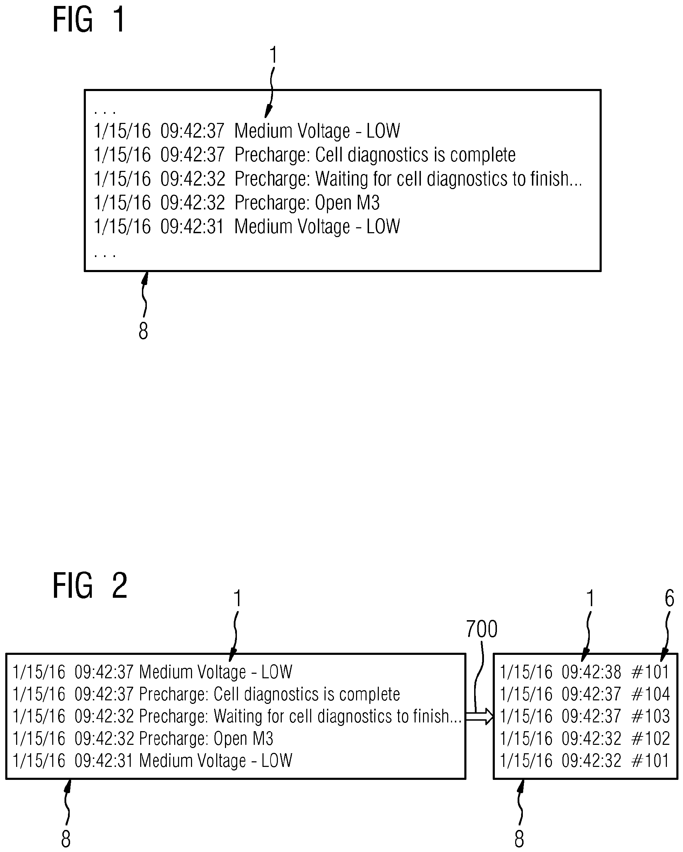

FIG 1 zeigt einen Beispielauszug solcher Event-Log-Daten 1. Ein jeweiliges Datum dieser Event-Log-Daten 1 umfasst dabei, wie FIG 1 zeigt, eine Datumsangabe (vgl. FIG 1, "1/15/16"), eine Zeitangabe (vgl. FIG 1, "09:42:37") und eine semantische Beschreibung eines Gerätezustands, eine sogenannte "Eventmeldung" (auch Systeminformation) (vgl. FIG 1, "Medium Voltage - LOW").

Die Event-Log-Daten 1 sind, wie FIG 1 ebenfalls zeigt und in FIG 6 verdeutlicht ist (vgl. FIG 6, "Daten Strukturierung" 600), zeitlich strukturiert 600 - und bilden - in ihrer Abfolge zeilenweise (vgl. FIG 1) - eine Zeitreihe 8 aus.

Diese strukturierten Event-Log-Daten 1 werden, wie FIG 6 weiter verdeutlicht (vgl. FIG 6, "Transformation in alphanumerische Zeitreihen" 700), nun in einem ersten Schritt in eine symbolische Zeitreihendarstellung transformiert 700, welcher eine Art Wörterbuch zugrunde liegt.

Das heißt, jeder Eventmeldung eines bestimmten Typs wird ein Symbol 6, z.B. alphanumerischer Art, d.h. ein alphanummerischer Wert 6, zugewiesen (vgl. FIG 2, "#101" (Medium Voltage - LOW), "#102" (Precharge: Open M3), "#103" (Precharge: Waiting for cell diagnostics to finish ...) oder "#104" (Precharge: Cell diagnostics is complete) usw., so dass sich die zeitlich strukturierten Event-Log-Daten aus FIG 1 entsprechend der Darstellung in FIG 2 ausdrücken/transformieren 700 lassen (vgl. FIG 6, "Transformation in alphanummerische Zeitreihen" 700).

Beispielsweise wird so, wie FIG 2 verdeutlicht, das Event-Log-Datum, "1/15/16 09:42:37 Medium Voltage LOW" nach "1/15/16 09:42:37 #101" transformiert 700.

Somit ergibt sich, wie FIG 2 zeigt, eine aus alphanumerischen Symbolen 6 bzw. Werten 6 bestehende Zeitreihe 8 (Sequenz), welche, wie FIG 6 verdeutlicht, nun einem sogenannten "Sequential Pattern Mining Algorithmus", dem "PrefixSpan" Algorithmus, zugeführt wird 500 (vgl. FIG 6, "Sequential Pattern Mining Algorithmus" 500).

Der "PrefixSpan" Algorithmus ist eine Sequential Pattern Mining Methode, die darauf abzielt Muster zu entdecken, die sich in zeitlichen Abfolgen von alphanumerischen Werten verbergen.

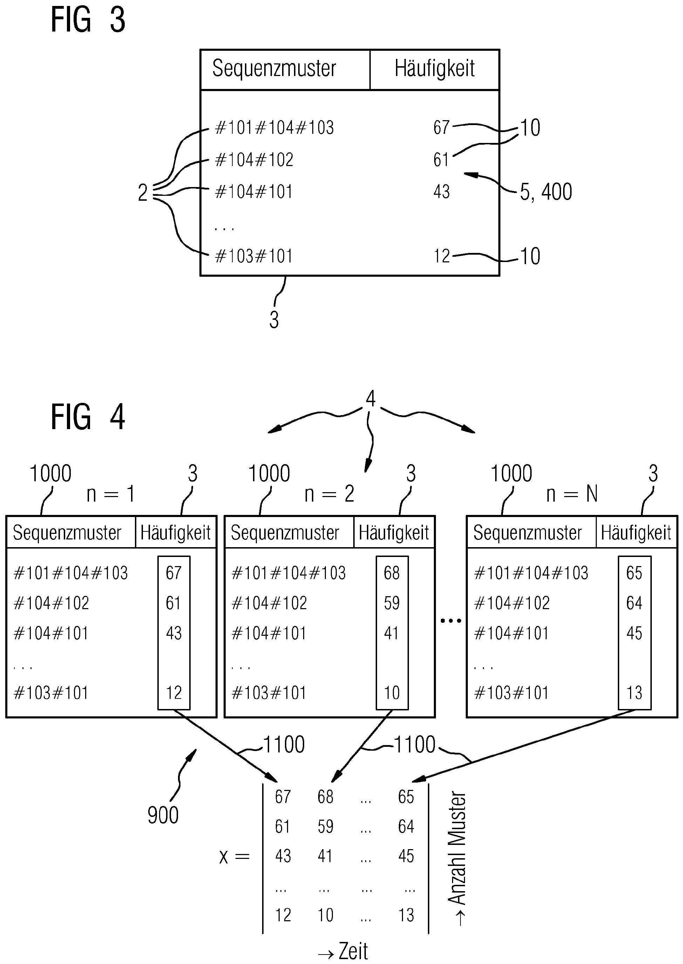

So bedeutet beispielsweise eine Notation einer Sequenz der Form (A B C), dass zuerst ein Item A auftritt, gefolgt von einem Item B und dann ein Item C am Ende bzw. hier eine Notation einer Sequenz der Form (#101#104#103), dass zuerst ein Item #101 (Medium Voltage - LOW) auftritt, gefolgt von einem Item #104 (Precharge: Cell diagnostics is complete) und dann ein Item #103 (Precharge: Waiting for cell diagnostics to finish ...) am Ende (vgl. FIG 3).

Der PrefixSpan Algorithmus hat zudem Parametrierungsmöglichkeiten, um die Anzahl und Signifikanz gefundener Sequenzmuster zu beeinflussen.

Diese sind:

a) Prozentuale Abdeckung. D.h., in wieviel Prozent der gesamten Observationen (Zeitreihen) sollte das gefundene Muster vertreten sein, um als signifikant vorliegend zu gelten.
b) Maximale Anzahl an Sequenz-Items. Die Sequenz (A B C) ist bspw. ein 3-Itemset. Resultierende Sequenzmuster werden die maximal vorgegebene Anzahl an Items somit nicht übersteigen.
c) Maximale Anzahl an Gap-Items. D.h., wie viele irrelevante alphanumerische Werte dürfen zwischen zwei Items eines gefundenen Sequenzmusters existieren. Bsp.: In der Sequenz (A F X B C) sind die Werte F und X Gap-Items zwischen den eigentlich "interessanten" Items A und B.

Basierend auf den in die Zeitreihe 8 bzw. Sequenz 8 transformierten Event-Log-Daten 1 (in Form der alphanumerischen Symbole/Werte 6) wird der "PrefixSpan" Algorithmus, wie FIG 6 verdeutlicht (vgl. FIG 6, "Sequential Patern Mining Algorithmus" 500), nun mit bestimmten Parametrierungen angewandt.

Dabei wird die Gesamtsequenz (z.B. mehrere Wochen/Monate) in N Sequenzen der Länge eines Tages zerschnitten. In diesen Tagessequenzen sucht der "PrefixSpan" Algorithmus nach signifikant häufig auftretenden Sequenzen und gibt diese als Resultat bzw. resultierende gefundene Sequenzmuster 2, inklusive der auftretenden Sequenzhäufigkeit 10 aus.

Die resultierende Liste der in der n-ten Tageszeitreihe gefunden Sequenzmuster 2 wird, wie FIG 3 zeigt, nach der Musterhäufigkeit 10 sortiert 400 ("Ranking", vgl. FIG 6, 400).

So tritt, wie FIG 3 verdeutlicht, für eine n-te Tageszeitreihe (3) das Sequenzmuster 2 #101#104#103 mit einer (höchsten) Häufigkeit 10 von 67 (mal in der n-ten Tageszeitreihe (3)) bzw. das Sequenzmuster 2 #104#102 mit einer (zweit höchsten) Häufigkeit 10 von 61 (mal in der n-ten Tageszeitreihe (3)) u.s.w. bzw. das Sequenzmuster 2 #103#101 mit einer (geringsten) Häufigkeit 10 von 12 (mal in der n-ten Tageszeitreihe (3)) (vgl. FIG 3) auf.

Liegen Datenbestände von N Tagen vor, in denen das Gerät erwiesenermaßen im "Normalbetrieb" war, kann, wie FIG 4 zeigt und FIG 6 verdeutlicht (vgl. FIG 6, "Transformation in Matrixform" 900), für jeden dieser Tage n = 1, ..., N die Vektoren $x_n$ der Sequenzmusterhäufigkeiten extrahiert 1000 und als Matrix X arrangiert 1100 werden (900).

Diese Matrixform (der Matrix X) erlaubt nun das Anlernen der multivariaten Häufigkeitsmuster für "Normalbetriebsszenarien" des Geräts.

Es kann nun die Kovarianz-Matrix S von der Matrix X und die Mahalanobis-Distanz $MD_n$ (Ähnlichkeitsmaß, Ähnlichkeit) zur zugrundeliegenden multivariaten Verteilung für jeden der Häufigkeitsvektoren $x_n$ bestimmt werden:

$$MD_n = \sqrt{(x_n - \mu)^T S^{-1}(x_n - \mu)} \qquad \text{(Formel 1)}.$$

$S^{-1}$ repräsentiert hierbei die Kovarianz-Matrix von der Matrix X und $\mu$ das komponentenweise arithmetische Mittel.

Da sowohl das arithmetische Mittel $\mu$ als auch die Kovarianz-Matrix $S^{-1}$ durch Ausreißer stark beeinflusst werden können, kann eine robuste Schätzung der Lokation $\mu$ und der Streuung S verwendet werden, um eine robuste Distanz zu ermitteln.

Die Matrix X der Häufigkeitsvektoren $x_n$ wird somit, wie FIG 5 zeigt, in eine neue eindimensionale Zeitreihe an Distanzwerten $MD_n$ 11 überführt (Ähnlichkeiten der Musterverteilungen in der Gesamtsequenz bzw. jeweils in einer n-ten Teilsequenz der Gesamtsequenz zur durchschnittlichen Musterverteilung in der Gesamtsequenz).

Basierend auf der Verteilungsdichtefunktion der MD-Zeitreihe 11, hier als Gauss-verteilt angenommen und

durch den Mittelwert $\mu MD$ und die Varianz $\sigma MD$ repräsentiert (vgl. Formel 3), basiert nun die Anomie-Detektion (vgl. FIG 6, "Anomalie-Detektion" 100, 200, 300) für einen - beispielsweise - zu untersuchenden n-ten Tag, d.h. für eine bzw. dargestellt durch eine zu untersuchende n-te Tageszeitreihe von Event-Log-Daten 1 (dieses zu untersuchenden "(Geräte-)Tages").

Dazu wird für die zu untersuchende n-te Tageszeitreihe von Event-Log-Daten 1 der entsprechende Häufigkeitsvektor $x_n$ der nach dem "PreFixSpan"-Algorithmus gefunden Sequenzmuster 2 bestimmt, für welchen zu untersuchenden Häufigkeitsvektor $x_n$ dann die zugehörige Mahalanobis-Distanz $MD_n$ (vgl. Formel 1, Ähnlichkeitsmaß, Ähnlichkeit) ermittelt wird 100 (vgl. Formel 1).

Diese Mahalanobis-Distanz $MD_n$ wird dann mit der eindimensionale Zeitreihe an Distanzwerten $MD_n$ 11 der "Normalbetriebsszenarien", d.h. der durchschnittlichen Ähnlichkeitsverteilung der Normalbetriebsszenarien, bzw. deren Verteilung/- sdichte (repräsentiert durch den Mittelwert $\mu MD$ und die Varianz $\sigma MD$) verglichen 200 (vgl. Formel 2 und Formel 3) und daraus die Anomalie 9 (d.h. ein anomaler Gerätezustand (für den zu untersuchenden n-ten Gerätetag)) oder eine nicht-Anomalie bestimmt/erkannt 300.

Hierfür wird der Parameter $\gamma$ eingeführt:

$$\gamma = \begin{cases} 0, wenn\ MD_n < \delta \\ 1, wenn\ MD_n > \delta \end{cases} \qquad\qquad (Formel\ 2)$$

mit

$$\delta = \mu MD + \alpha \sigma MD \qquad\qquad (Formel\ 3)$$

Hierbei bedeutet $\gamma = 1$ = Anomalie bzw. $\gamma = 0$ = keine Anomalie 300.

Der von außen vorgegebene Parameter $\alpha$ bestimmt dabei die Sensitivität des Detektionsverfahrens - und sollte zu Beginn nicht zu "scharf" gestellt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

**Patentansprüche**

1. Verfahren zur Ermittlung eines anomalen Zustands eines Systems, dessen Systemzustände unter Verwendung von Systemzustandsbeschreibungen (1) beschrieben werden, bei dem

   - eine Ähnlichkeit zwischen einer Musterverteilung von ausgewählten Zustandsmustern (2) von den Systemzustandsbeschreibungen (1) in einer ersten Menge (3) von Systemzustandsbeschreibungen (1) und einer durchschnittlichen Musterverteilung von den ausgewählten Zustandsmustern (2) von den Systemzustandsbeschreibungen (1) in einer zweiten Menge (4) von Systemzustandsbeschreibungen (1) ermittelt wird (100),
   - diese Ähnlichkeit verglichen wird mit einer Mehrzahl von solchen Ähnlichkeiten zwischen den Musterverteilungen innerhalb der zweiten Menge (4) von Systemzustandsbeschreibungen (1) und der durchschnittlichen Musterverteilung in der zweiten Menge (4) von Systemzustandsbeschreibungen (1) (200) und
   - unter Verwendung dieses Vergleichs ein anomaler Zustand (9) des Systems ermittelt wird (300).

2. Verfahren nach mindestens einem der voranstehenden Ansprüche, **dadurch gekennzeichnet, dass** die Ähnlichkeit ein statischer Abstand, insbesondere eine Mahalanobis Distanz MD, ist.

3. Verfahren nach mindestens einem der voranstehenden Ansprüche, **dadurch gekennzeichnet, dass** die erste Menge (3) von Systemzustandsbeschreibungen (1) eine Systemzustandsbeschreibungszeitreihe eines ersten Zeitabschnitts ist und/oder die zweite Menge (4) von Systemzustandsbeschreibungen (1) eine Systemzustandsbeschreibungszeitreihe eines zweiten Zeitabschnitts ist.

4. Verfahren nach mindestens einem der voranstehenden Ansprüche, **dadurch gekennzeichnet, dass** der zweite Zeitabschnitt ein Mehr- oder Vielfaches des ersten Zeitabschnitts ist und/oder der erste Zeitabschnitt ein Tag und/oder der zweite Zeitabschnitt mehrere Tage, ein oder mehrere Wochen und/oder ein oder mehrere Monate ist/sind.

5. Verfahren nach mindestens einem der voranstehenden Ansprüche, **dadurch gekennzeichnet, dass** der Ähnlichkeitsvergleich (200) unter Verwendung von statistischen Verteilungsparametern, insbesondere eines Mittelwerts und/oder einer Varianz, welche für die Mehrzahl von den Ähnlichkeiten ermittelt werden, durchgeführt wird.

6. Verfahren nach mindestens einem der voranstehenden Ansprüche, **dadurch gekennzeichnet, dass** bei dem Ähnlichkeitsvergleich (200) ein vorgebbarer Sensitivitätsparameter verwendet wird.

7. Verfahren nach mindestens einem der voranstehenden Ansprüche, **dadurch gekennzeichnet, dass** bei dem Ähnlichkeitsvergleich (200) ein Vergleichswert für die Mehrzahl von den Ähnlichkeiten ermittelt wird, insbesondere unter Verwendung des Mittelwerts und/oder der Varianz und/oder des Sensitivitätsparameters.

8. Verfahren nach mindestens einem der voranstehenden Ansprüche, **dadurch gekennzeichnet, dass** ein ausgewähltes Zustandsmuster (2) unter Verwendung eines Verfahrens einer Sequenzmuster-Erkennung (7) ("sequential pattern mining" (7)), insbesondere eines "PreFixSpan"-Algorithmus (7), insbesondere aus den Systemzustandsbeschreibungen (1) der zweiten Menge (4) von den Systemzustandsbeschreibungen (1), ermittelt und ausgewählt wird (500).

9. Verfahren nach mindestens einem der voranstehenden Ansprüche, **dadurch gekennzeichnet, dass** eine Rangordnung (5) der ausgewählten Zustandsmuster (2), insbesondere mit einer Häufigkeit als Rangordnungskriterium, gebildet wird (400).

10. Verfahren nach mindestens einem der voranstehenden Ansprüche, **dadurch gekennzeichnet, dass** unter Verwendung von zumindest einer Mehrzahl von Musterverteilungen von den ausgewählten Zustandsmustern (2) von den Systemzustandsbeschreibungen (1) in der ersten Menge (3) von den Systemzustandsbeschreibungen (1) die durchschnittliche Musterverteilung ermittelt wird, insbesondere unter Verwendung einer Schätzung ermittelt wird (Anlernen von multivarianten Häufigkeitsmuster für ein Systemszenarium).

11. Verfahren nach mindestens einem der voranstehenden Ansprüche, **dadurch gekennzeichnet, dass** die Systemzustandsbeschreibungen (1) der zweiten Menge (4) von den Systemzustandsbeschreibungen (1) zumindest weitestgehend normale Systemzustände sind.

12. Verfahren nach mindestens einem der voranstehenden Ansprüche, **dadurch gekennzeichnet, dass** die Systemzustandsbeschreibung (1) des Systems ein Event-Log-Datum ist.

13. Verfahren nach mindestens einem der voranstehenden Ansprüche, **dadurch gekennzeichnet, dass** die Systemzustandsbeschreibung (1) des Systems in Form eines alphanumerischen Werts (6) beschrieben wird, welcher dem Event-Log-Datum zugewiesen ist.

14. Verfahren nach mindestens einem der voranstehenden Ansprüche, **dadurch gekennzeichnet, dass** das System ein Gerät, insbesondere ein Mittelspannungsumrichter, oder eine Maschine oder eine Anlage oder ein in einem Gerät oder in einer Anlage oder in einer Maschine ablaufender Prozess ist.

15. Anordnung zur Ermittlung eines anomalen Zustands eines Systems, dessen Systemzustände unter Verwendung von Systemzustandsbeschreibungen (1) beschrieben werden, mit einem Datenverarbeitungsmittel, das derart eingerichtet ist, dass

  - eine Ähnlichkeit zwischen einer Musterverteilung von ausgewählten Zustandsmustern (2) von den Systemzustandsbeschreibungen (1) in einer ersten Menge (3) von Systemzustandsbeschreibungen (1) und einer durchschnittlichen Musterverteilung von den ausgewählten Zustandsmustern (2) von den Systemzustandsbeschreibungen (1) in einer zweiten Menge (4) von Systemzustandsbeschreibungen (1) ermittelt wird (100),
  - diese Ähnlichkeit verglichen wird (200) mit einer Mehrzahl von solchen Ähnlichkeiten zwischen den Musterverteilungen innerhalb der zweiten Menge (4) von Systemzustandsbeschreibungen (1) und der durchschnittlichen Musterverteilung in der zweiten Menge (4) von Systemzustandsbeschreibungen (1) und
  - unter Verwendung dieses Vergleichs ein anomaler Zustand (9) des Systems ermittelt wird (300).

# FIG 1

1

. . .
1/15/16  09:42:37  Medium Voltage - LOW
1/15/16  09:42:37  Precharge: Cell diagnostics is complete
1/15/16  09:42:32  Precharge: Waiting for cell diagnostics to finish...
1/15/16  09:42:32  Precharge: Open M3
1/15/16  09:42:31  Medium Voltage - LOW
. . .

8

# FIG 2

1

700

1        6

1/15/16  09:42:37 Medium Voltage - LOW
1/15/16  09:42:37 Precharge: Cell diagnostics is complete
1/15/16  09:42:32 Precharge: Waiting for cell diagnostics to finish...
1/15/16  09:42:32 Precharge: Open M3
1/15/16  09:42:31 Medium Voltage - LOW

1/15/16  09:42:38  #101
1/15/16  09:42:37  #104
1/15/16  09:42:37  #103
1/15/16  09:42:32  #102
1/15/16  09:42:32  #101

8

8

## FIG 3

| Sequenzmuster | Häufigkeit |
|---|---|
| #101#104#103 | 67 |
| #104#102 | 61 |
| #104#101 | 43 |
| . . . | |
| #103#101 | 12 |

2

10

5, 400

10

3

## FIG 4

4

**n = 1**

1000        3

| Sequenzmuster | Häufigkeit |
|---|---|
| #101#104#103 | 67 |
| #104#102 | 61 |
| #104#101 | 43 |
| . . . | |
| #103#101 | 12 |

**n = 2**

1000        3

| Sequenzmuster | Häufigkeit |
|---|---|
| #101#104#103 | 68 |
| #104#102 | 59 |
| #104#101 | 41 |
| . . . | |
| #103#101 | 10 |

**n = N**

1000        3

| Sequenzmuster | Häufigkeit |
|---|---|
| #101#104#103 | 65 |
| #104#102 | 64 |
| #104#101 | 45 |
| . . . | |
| #103#101 | 13 |

. . .

1100

1100

900

$$X = \begin{vmatrix} 67 & 68 & \ldots & 65 \\ 61 & 59 & \ldots & 64 \\ 43 & 41 & \ldots & 45 \\ \ldots & \ldots & \ldots & \ldots \\ 12 & 10 & \ldots & 13 \end{vmatrix}$$

→ Anzahl Muster

→ Zeit

## FIG 5

11

MD

Zeit n

## FIG 6

100, 200, 300

800   600   700   500   400   900

| Eventlog-Daten | Daten-Struktu-rierung | Transformation in alpha-numerische Zeitreihen | Sequential Pattern Mining Algorithmus | Resultat Ranking und Transformation in Matrixform | Anomalie-Detektion |

(1)   (8)   (6, 8)   (7)   (5)   (9)

Europäisches
Patentamt

European
Patent Office

Office européen
des brevets

# EUROPÄISCHER RECHERCHENBERICHT

**Nummer der Anmeldung**

EP 17 17 2168

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/115002 A1 (KOCHER MICHAEL [AT] ET AL) 24. April 2014 (2014-04-24) <br> * Absatz [0001] - Absatz [0007] * <br> * Absatz [0013] - Absatz [0035] * <br> * Absatz [0174] - Absatz [0205] * <br> * Abbildung 1 * <br> ----- | 1-15 | INV. <br> G06Q10/06 <br> G05B23/02 |
| A | US 7 480 640 B1 (ELAD JOSEPH B [US] ET AL) 20. Januar 2009 (2009-01-20) <br> * Spalte 1, Zeile 18 - Zeile 51 * <br> * Spalte 14, Zeile 58 - Spalte 16, Zeile 14 * <br> * Spalte 5, Zeile 5 - Spalte 7, Zeile 22 * <br> * Abbildung 1 * <br> ----- | 1-15 | |

**RECHERCHIERTE SACHGEBIETE (IPC)**

G06Q
G05B

Der vorliegende Recherchenbericht wurde für alle Patentansprüche erstellt

| Recherchenort | Abschlußdatum der Recherche | Prüfer |
|---|---|---|
| München | 15. September 2017 | Hasubek, Bodo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 2168

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2017

| Im Recherchenbericht angeführtes Patentdokument | Datum der Veröffentlichung | Mitglied(er) der Patentfamilie | Datum der Veröffentlichung |
|---|---|---|---|
| US 2014115002 A1 | 24-04-2014 | KEINE | |
| US 7480640 B1 | 20-01-2009 | KEINE | |

Für nähere Einzelheiten zu diesem Anhang : siehe Amtsblatt des Europäischen Patentamts, Nr.12/82

EPO FORM P0461